# EUROPÄISCHE PATENTSCHRIFT

(11) **EP 0 671 568 B1**
(45) Veröffentlichungstag und Bekanntmachung des Hinweises auf die Patenterteilung: **05.08.1998**
(21) Anmeldenummer: 95101014.9
(22) Anmeldetag: 26.01.1995
(51) Int. Cl.: F16D 1/076

(54) **Fügeverbindung zweier Bauteile**
Connection between two elements
Raccord entre deux éléments

(30) Priorität: 07.03.1994 DE 4407520
(43) Veröffentlichungstag der Anmeldung: 13.09.1995
(73) Patentinhaber: Bayerische Motoren Werke Aktiengesellschaft, 80788 München (DE)
(72) Erfinder: Gabler, Reinhold, D-80935 München (DE); Weidenauer, Günther, D-80687 München (DE)

(56) Entgegenhaltungen:
- FR-A- 2 598 759
- US-A- 5 052 891

## Beschreibung

Die Erfindung bezieht sich auf eine Fügeverbindung zweier Bauteile nach dem Oberbegriff des Hauptanspruchs.

Die FR-A-2 598 759 zeigt eine solche Möglichkeit. Dabei wird ein Fahrzeugrad bei seiner Montage auf einer Radnabe zentriert. Hierfür sind elastische Zungen oder Finger entweder an der Radscheibe oder der Radnabe vorgesehen, die beim Aufsetzen des Rades durch einen entsprechend geformten Abschnitt des anderen Bauteil elastisch aufgeweitet werden.

Ein weiterer bekannter Stand der Technik sieht Fügeverbindungen zweier rotierender Elemente am Beispiel der Koppelung einer Gelenkwelle im Antriebsstrang eines Fahrzeuges mit einem Hinterachsgetriebe durch Spielpassung der zu fügenden Elemente vor. Durch das Spiel in der Passung kann ein Mittenversatz entstehen, welcher zu Unwuchten im Antriebsstrang führt. Die Folge sind unangenehme Schwingungen im Fahrzeuginnenraum.

Aufgabe der Erfindung ist es daher, zwei rotierende Elemente so ineinanderzufügen, daß entstehende Unwuchten minimiert werden.

Die Aufgabe wird erfindungsgemäß mit den Merkmalen des Anspruchs 1 erreicht. Vorteilhafte Ausgestaltungen der erfindungsgemäßen Fügeverbindung ergeben sich aus den Unteransprüchen.

Durch die elastische Verformung des einen Fügepartners durch den anderen ergibt sich nach dem Fügevorgang eine eindeutige, zentrierten Lage der beiden Teile zueinander. Es wird dadurch sichergestellt, daß durch das Koppeln der beiden Bauteile die Entstehung von Unwuchten vermieden werden. Bei einer Anwendung im Kraftfahrzeug verbessert sich dadurch die Akustik im Fahrzeuginnenraum.

Desweiteren können die Passungstoleranzen größer gehalten werden, was sich kostengünstig in der Fertigung auswirkt. Außerdem ergibt sich durch diese elastische Aufweitung der Aufnahmeöffnung der Vorteil, daß im Montagefall die Teile ohne weiteres ausgetauscht werden können.

Nach der Erfindung werden demnach Kardangelenke und/oder sonstige Gelenke mit der Antriebswelle bzw. entsprechenden Getriebewelle des Verteilergetriebes oder Schaltgetriebes verbunden. Dadurch werden die Anforderungen an die Wuchtqualität einer Gelenkwelle reduziert, Reklamationen verringert und schließlich wird die Lebensdauer für benachbarte Bauteile aufgrund der geringeren Unwucht und der damit verbundenen Schwingungen positiv beeinflußt. Insgesamt führen all diese Punkte zu einer Reduzierung der Herstellungs- bzw. Betriebskosten eines solchen Fahrzeuges.

In einer zweckmäßigen Ausführung weist ein Zentrierkragen an seiner die Aufnahmeöffnung bildenden Innenwandung in Fügerichtung eine Hinterschneidung auf. Damit wird einmal die Elastizität des Zentrierkragens erhöht. Zum anderen verringert sich auch die Fügekraft. Um die Elastizität noch weiter zu erhöhen, ist es zweckmäßig, den Zentrierkragen in seinem Querschnitt an gezielten Stellen zu schwächen. Das kann einmal durch eine radiale Einschnürung erfolgen, die am Außenumfang des Zentrierkragens vorgenommen wird.

Um das Zentrieren während des Fügevorgangs zu erleichtern, ist in einer zweckmäßigen Ausgestaltung die Welle an ihrer der Aufnahmeöffnung zugewandten Stirnseite zu einem Zentrierkegel ausgeformt.

Durch die zuvor erwähnten Maßnahmen der Querschnittsverringerung und der Hinterschneidung wird, wie erwähnt, in vorteilhafter Weise die Fügekraft reduziert.

Vorteilhaft kann es desweiteren sein, die Innenwandung des als Vollkragen ausgebildeten Zentrierkragens mit einer Beschichtung mit hoher Gleitfähigkeit zu versehen. Diese Beschichtung kann ein weiches Metall wie zum Beispiel Zink sein. Es sind aber auch Kunststoffbeschichtungen einsetzbar, ebenso kann eine Kombination aus Metall und Kunststoffbeschichtung verwendet werden.

Soweit eine geringfügige, plastische Verformung die elastische Verformung des Zentrierkragens überlagert, ist dies unschädlich, solange die Vorteile der Erfindung erzielt werden.

In einer weiteren vorteilhaften Ausgestaltung der Erfindung sind Maßnahmen vorgesehen für das Demontieren der beiden gekoppelten bzw. gefügten Teile. Zu diesem Zweck ist am Umfang der Welle wenigstens eine Eingriffsöffnung für ein Demontagewerkzeug vorgesehen. Im einfachsten Fall kann die Eingriffsöffnung durch eine umlaufende Radialnut gebildet sein.

Weitere Vorteile der Erfindung ergeben sich aus der nachfolgenden Beschreibung mehrerer Ausführungsbeispiele, die anhand der Zeichnung genauer erklärt werden. Es zeigen:
- Figur 1: die Koppelstelle zwischen einer Gelenkwelle eines Kraftfahrzeuges und einer Antriebswelle eines Ausgleichsgetriebes und
- Figur 2: in vergrößertem Maßstab, die in Figur 1 mit Kreis A dargestellten zu fügenden Abschnitte mit einer ersten Ausführungsform des Zentrierkragens.

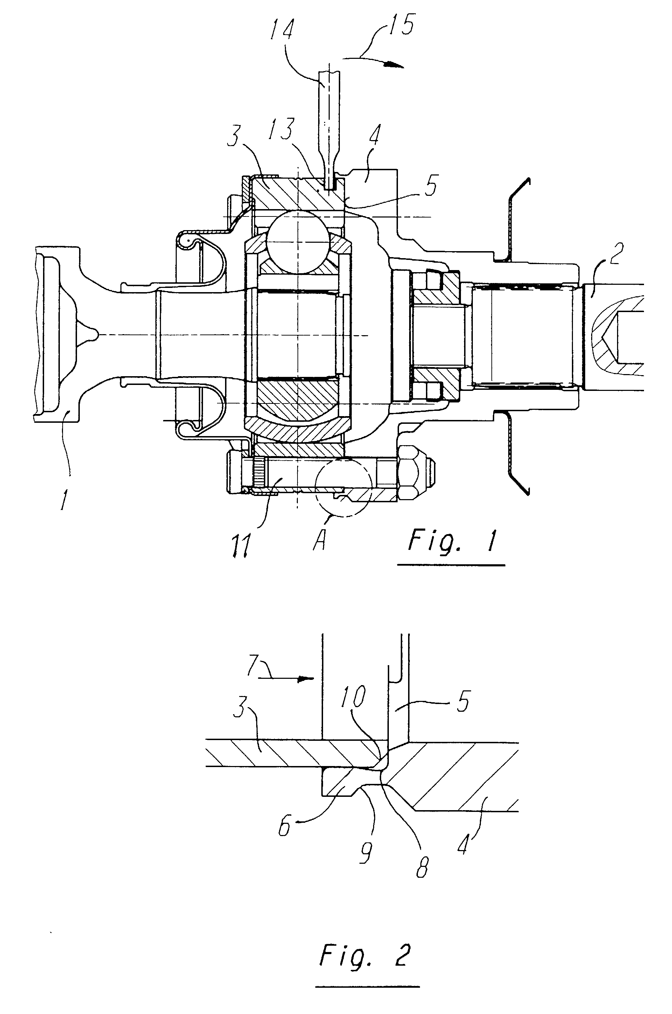

Die Figur 1 zeigt einen Abschnitt 1 einer Gelenkwelle eines Kraftfahrzeuges. Der Abschnitt 1 ist über noch zu beschreibende Bauteile mit der Antriebswelle 2 eines nicht weiter dargestellten Differentialgetriebes gekoppelt. Im Bereich der Koppelung trägt der Abschnitt 1 der Gelenkwelle ein Kugelgelenk mit einem Gelenkaußenring 3. Das Kugelgelenk steht in drehfester Verbindung mit dem Abschnitt 1, jedoch läßt es aufgrund seiner Bauart eine Winkelbeweglichkeit des Abschnitts 1 gegenüber dem Gelenkaußenring 3 zu.

Der Gelenkaußenring 3 stellt im Sinne der Erfindung das eine zu fügende Bauteil, nämlich die Welle dar.

Das andere zu fügende Bauteil ist durch einen Befestigungsflansch 4 gebildet, der wiederum verdrehfest auf der Antriebswelle 2 sitzt. Dabei weist der Befestigungsflansch 4 eine Aufnahmeöffnung 5 auf, in die der Gelenkring 3 eingefügt ist. Es wäre auch möglich, die Teile so auszulegen, daß die Aufnahmeöffnung auf der Gelenkseite liegt. Mehrere über den Umfang verteilte Befestigungsschrauben 11, von denen nur eine in Figur 1 stellvertretend für alle erkennbar ist, halten die ineinander gefügten Teile zusammen. Die sonstigen Einzelheiten der Figur 1 sind von üblicher Ausführung und bedürfen daher keiner weiteren Erläuterung.

Die Außenabmessungen des Gelenkringes 3 sind gegenüber den Innenabmessungen der Aufnahmeöffnung 5 so dimensioniert, daß beim Fügevorgang der Gelenkring 3 die Aufnahmeöffnung elastisch aufweitet.

Die gefügten Bauteile sind in Figur 2 in vergrößertem Maßstab bruchstückhaft erkennbar. Die Aufnahmeöffnung 5 des Befestigungsflansches 4 wird durch einen umlaufenden kreisförmigen Zentrierkragen 6 definiert. An seiner Innenwandung weist der Zentrierkragen 6 in Fügerichtung - sie ist in Figur 2 durch den Pfeil 7 dargestellt ist - eine Hinterschneidung 8 auf. Am Außenumfang und gegenüberliegend der Hinterschneidung 8 ist am Zentrierkragen 9 außerdem eine radiale Einschnürung 9 vorgesehen. Auf diese Weise erhält der Zentrierkragen 6 die für den Fügevorgang notwendige Elastizität.

Der Gelenkring 3 ist an seiner der Aufnahmeöffnung 5 zugewandten Stirnseite zu einem Zentrierkegel 10 ausgebildet. Er fädelt sich dadurch beim Fügevorgang in die Aufnahmeöffnung 5 ein und zentriert sich automatisch, da der Zentrierkragen 6 über seinen ganzen Umfang in gleicher Weise elastisch nachgibt bzw. sich aufweitet.

Die Fügekraft kann durch ein spezielles Fügewerkzeug aufgebracht werden. Andererseits ist es möglich, durch das gleichzeitige Anziehen zweier, um 180° am Umfang verteilt angeordneter Befestigungsschrauben 11 den Gelenkring 3 in die durch den Zentrierkragen 6 gebildeten Aufnahmeöffnung 5 hineinzuzwängen.

Um die gefügten Teile wieder voneinander lösen zu können, sieht der Gelenkring 3 nach Figur 1 eine Eingriffsöffnung 13 an seinem Außenumfang vor. Die Eingriffsöffnung ist so angebracht, daß sie bei gefügten Zustand teilweise vom Zentrierkragen des Befestigungsflansches 4 überdeckt wird.

Zum Lösen des Gelenkringes 3 vom Befestigungsflansch 4 läßt sich - nachdem die Schrauben 11 entfernt sind - ein Demontagewerkzeug 14 mit seiner Spitze in die Eingriffsöffnung 13 einführen. Durch Aushebeln, das heißt durch Bewegen des Demontagewerkzeuges 14 in Pfeilrichtung 15, wird der Gelenkring 3 aus der Aufnahmeöffnung 5 herausgedrückt. Dabei dient der Zentrierkragen als Widerlager für das Demontagewerkzeug 14.

## Patentansprüche

1. Fügeverbindung zweier Bauteile, bei der das eine Bauteil in eine an ihrem Umfang mit Zentriermitteln versehenen Aufnahmeöffnung des anderen Bauteils eingeschoben ist, wobei die Außenabmessungen des einen Bauteils gegenüber der Innenabmessungen der Aufnahmeöffnung so dimensioniert sind, daß beim Fügevorgang die Zentriermittel elastisch aufgeweitet werden, dadurch gekennzeichnet, daß ein Gelenkring (3) einer Antriebswelle eines Kraftfahrzeuges in eine Aufnahmeöffnung (5) eines mit einer Getriebewelle verbundenen Befestigungsflansch (4) eingeschoben ist und daß die Zentriermittel durch einen umlaufenden kreisförmigen Zentrierkragen (6) an der Aufnahmeöffnung (5) gebildet sind.

2. Fügeverbindung nach Anspruch 1, dadurch gekennzeichnet, daß der Zentrierkragen (6) an seiner die Aufnahmeöffnung (5) bildenden Innenwandung in Fügerichtung (7) eine Hinterschneidung (8) aufweist.

3. Fügeverbindung nach Anspruch 1 oder 2, dadurch gekennzeichnet, daß der Zentrierkragen (6) eine seine Elastizität erhöhende Querschnittsverringerung aufweist.

4. Fügeverbindung nach Anspruch 3, dadurch gekennzeichnet, daß an dem Zentrierkragen (6) im Bereich seines Außenumfangs eine radiale Einschnürung (9) vorgesehen ist.

5. Fügeverbindung nach einem der Ansprüche 1 bis 4, dadurch gekennzeichnet, daß die Welle an seiner der Aufnahmeöffnung (5) zugewandten Stirnseite einen Zentrierkegel (10) ausbildet.

6. Fügeverbindung nach einem der Ansprüche 1 bis 5, dadurch gekennzeichnet, daß die Innenwand des Zentrierkragens (9) eine die Fügekraft reduzierende Gleitbeschichtung trägt.

7. Fügeverbindung nach Anspruch 6, dadurch gekennzeichnet, daß eine Metall- und/oder Kunststoffbeschichtung vorgesehen ist.

8. Fügeverbindung nach Anspruch 7, dadurch gekennzeichnet, daß als Beschichtung Zink dient.

9. Fügeverbindung nach einem der Ansprüche 1 bis 8, dadurch gekennzeichnet, daß am Umfang der Welle wenigstens eine, nach dem Fügevorgang vom Zentrierkragen nicht oder nur teilweise verdeckte Eingriffsöffnungen (13) für ein Demontagewerkzeug (14) vorgesehen ist.

## Claims

1. A joint connecting two components, wherein one component is inserted into a receiving opening provided at its circumference with centring means in the other component, the outer dimensions of the first component being such, compared with the inner dimensions of the receiving opening, that during the joining operation the centring means are elastically expanded, characterised in that a ring (3) on a joint on a drive shaft of a motor vehicle is inserted into a receiving opening (5) in a securing flange (4) connected to a gear shaft and the centring means is formed by a peripheral circular centring collar (6) on the receiving opening (5).

2. A connecting joint according to claim 1, characterised in that the centring collar (6) has an undercut (8) in the direction (7) of the joint on its inner wall forming the receiving opening (5).

3. A connecting joint according to claim 1 or claim 2, characterised in that the centring collar (6) has a reduction in cross-section which increases its elasticity.

4. A connecting joint according to claim 3, characterised in that a radial constriction (9) is provided on the centring collar (6) in the region of its outer periphery.

5. A connecting joint according to any of claims 1 to 4, characterised in that the shaft forms a centring cone (10) on its end face towards the receiving opening (5).

6. A connecting joint according to any of claims 1 to 5, characterised in that the inner wall of the centring collar (9) has a sliding coating for reducing the force needed to make the joint.

7. A connecting joint according to claim 6, characterised in that a metal and/or plastics material coating is provided.

8. A connecting joint according to claim 7, characterised in that the coating is of zinc.

9. A connecting joint according to any of claims 1 to 8, characterised in that at least one engagement opening (13), which is not or only partly covered by the centring collar after the joining operation, is provided for a dismantling tool (14).

## Revendications

1. Raccord d'assemblage jointif de deux éléments, dans lequel un élément est introduit dans une ouverture de réception prévue dans l'autre élément et portant des moyens de centrage à sa périphérie, les dimensions externes du premier élément étant adaptées aux dimensions internes de l'ouverture de réception de manière que les moyens de centrage s'élargissent élastiquement lors de l'assemblage,
caractérisé en ce qu'
une bague d'un joint d'articulation (3) d'un arbre d'entraînement d'un véhicule automobile est introduite par glissement dans une ouverture de réception (5) existant dans une bride de fixation (4) reliée à un arbre de transmission, les moyens de centrage étant constitués par un collet de centrage circulaire (6) à la périphérie de l'ouverture de réception (5).

2. Raccord selon la revendication 1,
caractérisé en ce que
le collet de centrage (6) présente, sur sa paroi interne formant l'ouverture de réception (5), une contredépouille (8) selon la direction d'assemblage (7).

3. Raccord selon la revendication 1 ou 2,
caractérisé en ce que
le collet de centrage (6) présente une réduction de section augmentant son élasticité.

4. Raccord selon la revendication 3,
caractérisé en ce que
le collet de centrage (6) présente, sur sa périphérie, une gorge radiale (9).

5. Raccord selon l'une des revendications 1 à 4,
caractérisé en ce que
l'arbre, le long de sa face frontale en regard de l'ouverture de réception (5), a la forme d'un cône de centrage (10).

6. Raccord selon l'une des revendications 1 à 5,
caractérisé en ce que
la paroi interne du collet de centrage (9) porte un revêtement de glissement réduisant la force nécessaire à l'assemblage.

7. Raccord selon la revendication 6,
caractérisé en ce que
le revêtement est à base de métal ou de matière plastique.

8. Raccord selon la revendication 7,
caractérisé en ce que
le revêtement est en zinc.

9. Raccord selon l'une des revendications 1 à 8,
caractérisé en ce que
la périphérie de l'arbre porte au moins une ouverture de prise (13) dans laquelle peut être engagé un outil de démontage (14) et qui, après assemblage, n'est pas recouverte, ou n'est recouverte qu'en partie, par le collet de centrage.
